# EUROPÄISCHE PATENTSCHRIFT

(11) **EP 2 225 533 B1**
(45) Veröffentlichungstag und Bekanntmachung des Hinweises auf die Patenterteilung: **26.03.2014**
(21) Anmeldenummer: 09756476.9
(22) Anmeldetag: 18.11.2009
(51) Int. Cl.: G01C 11/00, G01S 13/90, G01S 13/86

(54) **VERFAHREN ZUR GEOREFERENZIERUNG OPTISCHER FERNERKUNDUNGSBILDER**
METHOD FOR GEO-REFERENCING OF OPTICAL REMOTE SENSING IMAGES
PROCÉDÉ DE GÉORÉFÉRENCEMENT D'IMAGES OPTIQUES D'EXPLORATION À DISTANCE

(30) Priorität: 24.11.2008 DE 102008058769
(43) Veröffentlichungstag der Anmeldung: 08.09.2010
(73) Patentinhaber: Deutsches Zentrum für Luft- und Raumfahrt e.V., 51147 Köln (DE)
(72) Erfinder: BAMLER, Richard, 81375 München (DE); REINARTZ, Peter, Dießen 86911 (DE); SURI, Sahil, 64285 Darmstadt (DE)
(74) Vertreter: von Kreisler Selting Werner
(86) Internationale Anmeldenummer: PCT/EP2009/065361
(87) Internationale Veröffentlichungsnummer: WO 2010/057903

(56) Entgegenhaltungen:
- US-A- 5 552 787
- US-B1- 6 757 445

## Beschreibung

Die Erfindung betrifft ein Verfahren zur Georeferenzierung optischer Fernerkundungsbilder.

### Beschreibung des technischen Problems und Stand der Technik

Georeferenzierung von vom Satelliten oder von anderen Plattformen (z.B. Flugzeug, Luftschiff, UAV) aufgenommener Fernerkundungs-Bilddaten ist die Zuordnung von 3-D Geo-Koordinaten zu jedem Bildpunkt. Erst nach einer Georeferenzierung können diese Bilddaten in beliebige Geometrien projiziert, kartographisch interpretiert werden und, z.B. in geografischen Informationssystemen, mit Geodaten anderer Herkunft oder mit Bildern, die mit einer anderen Abbildungsgeometrie aufgenommen wurden, verschnitten werden. Auch zeitliche Änderungen der Erdoberfläche können mithilfe von Fernerkundungsbildern nur dann automatisch erfasst werden, wenn die Bilddaten einer Zeitserie passgenau zueinander, und am besten in absoluten Koordinaten, registriert wurden. Für eine vollständige Automatisierung von Verarbeitungsketten sollte die Genauigkeit der Georeferenzierung besser als die räumliche Auflösung der Bilddaten sein. Eine genaue Georeferenzierung ist also ein essentieller Schritt bei der Verarbeitung von Fernerkundungsbilddaten.

In der hochauflösenden Fernerkundung der Erdoberfläche werden bevorzugt zwei Technologien der Bildgewinnung eingesetzt:
1) Elektro-optische Kameras liefern Bilder (im Folgenden "optische Bilder" genannt) im sichtbaren und infraroten Spektralbereich. Jeder aufgezeichnete Bildpunkt (Pixel) der Kamera repräsentiert zwei Winkel und die Position des Instruments entlang seines Flugpfads (im folgenden "natives optisches Koordinatensystem" genannt). Die direkte Georeferenzierung erfolgt durch Vorwärtsschnitt des sogenannten Line-of-sight Vektors mit einem digitalen Oberflächenmodell (DOM). Die Genauigkeit hängt neben der Kenntnis der inneren Orientierung der Kamera von den Messungen der Position und der Orientierung der Kamera im Raum ab, letzteres also von Winkeln, die an Bord der Plattform gemessen werden und der Verarbeitung zur Verfügung stehen. Während die innere Orientierung durch Kalibration und die Position durch GPS-Messungen sehr genau gemessen werden, können diese Winkel jedoch mit gängigen Instrumenten nur mit einer Genauigkeit bestimmt werden, die im besten Falle einer Georeferenzierungsgenauigkeit in der Größenordnung von 10 m entspricht. Einige Satellitenbetreiber liefern diese Orientierungsinformation integriert als Koeffizienten eines Polynoms, den sogenannten RPCs (Rational Polynomial Coefficients). Damit erreicht man im besten Fall die gleichen Ergebnisse wie bei der direkten Georeferenzierungsmethode und bleibt daher im selben Genauigkeitsbereich. Verbesserungen lassen sich nur durch Einführung von Bodenkontrollinformation (3D-Punkte) von denen die Lage genau bekannt ist und die im Bild auch bestimmt werden können erzielen. Damit erreicht man letztlich Genaulgkeiten die im Bereich der halben Pixelgröße liegen.
2) Synthetik Aperture Radar (SAR)-Instrumente nutzen ein aktives Mikrowellenabbildungsverfahren, das unabhängig von Sonnenlicht und Bewölkung Bilder liefert. Jeder Bildpunkt repräsentiert eine Entfernung zum Instrument, den sog. "Range" und eine Position des Instruments entlang seines Flugpfads, die sog. "Azimut"-Koordinate (im folgenden "natives SAR-Koordinatensystem" genannt). Blickwinkel, wie beim optischen Abbildungsprinzip, können mit einem SAR nicht unterschieden werden. Die Georeferenzierung geschieht durch den Schnitt einer Kugel vom Radius des gegebenen Range, eines um die Augenblicksgeschwindigkeit (in erdfesten Koordinaten) des Instruments rotationssymmetrischen Kegelmantels, der die Doppler-Frequenz des Verarbeitungs-Algorithmus repräsentiert, sowie dem DOM des abgebildeten Gebiets. In den meisten Fällen wurden die Daten auf eine Doppler-Frequenz von Null prozessiert, der Kegelmantel wird dann zur Ebene senkrecht zur augenblicklichen Instrumentengeschwindigkeit. Die Genauigkeit hängt einerseits vom Ort des Instruments zu jedem Zeitpunkt, zum anderen von der Genauigkeit der Richtung des Geschwindigkeitsvektors ab. Beide Größen sind mit modernen GNSS-Instrumenten an Bord der Plattform hochgenau vermessbar. Weitere Fehlereinflüsse, wie Laufzeitverzögerungen durch die Ionosphäre und die Troposphäre können mit externer Zusatzinformation weitestgehend korrigiert werden.

Durch den großen Abstand von Fernerkundungssensoren zum abzubildenden Objekt, übersetzen sich die kleinsten messbaren Winkelfehler in der Georeferenzierung optischer Bilder bereits in unakzeptable Ablagefehler von typischerweise 5m - 30 m. Demgegenüber unterliegt der Fehler einer SAR-Bild-Georeferenzierung nicht dieser "Hebelwirkung". So hat das deutsche TerraSAR-X als erster Radarsatellit eine Georeferenzierungsgenauigkeit von ca. 0,5 m erreicht.

Bekannte Techniken der Georeferenzierung optischer Bilder sind:
- manuell durch Messung von Bodenkontrollpunkten durch GPS Messungen im Gelände oder in ausreichend genauem Kartenmaterial, Nachteile:
   - sehr aufwändig und in vielen Bereichen der Welt nicht möglich bzw. keine entsprechenden Karten vorhanden
- automatisch durch Korrelation mit bereits vorher aufwändig georeferenzierten optischen Bildern, Nachteile:
   - georeferenzierte Referenzbilddaten oft nicht in der entsprechenden Qualität verfügbar von beliebigen Orten der Welt
   - keine zertifizierbare absolute Genauigkeit, Fehlervererbung

Aus US-B-6 757 445 ist ein Verfahren zur Georeferenzierung optischer Fernerkundungsbilder eines Erdoberflächenbereichs bekannt, bei dem ein mit einer elektro-optischen Aufnahmeeinrichtung aufgenommenes optisches Fernerkundungsbild des betreffenden Erdoberflächenbereichs bereitgestellt wird, wobei das optische Fernerkundungsbild mit den vorhandenen Orbit- und Orientierungsinformationen und einem digitalen Oberflächenmodel des betreffenden Erdoberflächenbereichs georeferenziert wird.

Aufgabe der Erfindung ist es, die Georeferenzierungsgenauigkeit optischer Fernerkundungsbilder zu erhöhen.

Zur Lösung dieser Aufgabe wird mit der Erfindung ein Verfahren zur Georeferenzierung optischer Fernerkundungsbilder mit den Merkmalen des Anspruchs 1 vorgeschlagen.

Vorteilhafte Weiterbildungen des Verfahrens sind Gegenstand der Unteransprüche.

Wesensmerkmal der Erfindung ist es, die hohe Georeferenzierungsgenauigkeit von SAR-Bildern, wie sie erstmalig mit TerraSAR-X zur Verfügung steht, aber auch in zukünftigen SAR-Systemen anzufinden sein wird, zur automatischen oder auch manuellen Korrektur der Georeferenzierung optischer Bilddaten zu nutzen.

Gegenüber den bekannten Verfahren handelt es sich bei dem erfindungsgemäßen Verfahren um ein solches, das unabhängig von vorangegangener Georeferenzierung optischer Bilder funktioniert und durch manuelle oder automatisierte Bildverarbeitung zu einer hochgenauen Georeferenzierung optischer Bilddaten führt.

Auch wenn die Nutzung vorher bereits georeferenzierter optischer Bilder Stand der Technik ist, so ist dieser Ansatz, soweit bekannt, noch nicht auf die Nutzung von SAR-Bildern als Referenz ausgeweitet worden. Der Grund liegt einerseits in den grundsätzlich unterschiedlichen Abbildungsgeometrien von SAR und Optik und andererseits in der gänzlich verschiedenen radiometrischen Abbildung derselben Objekte. So kann ein im optischen Bild hell erscheinendes Gebiet im SAR-Bild dunkel sein und umgekehrt. Einfache Korrelationsverfahren, wie sie meist verwendet werden, sind daher nicht geeignet, die Parallaxen zwischen dem SAR- und dem optischen Bild zu bestimmen. Vielmehr müssen aufwändigere und robustere Verfahren, wie Mutual Information, oder Feature basierte Ansätze verwendet werden. Ein weiterer Grund dafür, dass die Verwendung von SAR-Bildern bisher, soweit bekannt, nicht zur Verbesserung der Georeferenzierung optischer Daten verwendet wurde, ist, dass mit TerraSAR-X erst seit kurzem SAR-Bilder mit der hohen Georeferenzierungsgenauigkeit zur Verfügung stehen.

Das erfindungsgemäße Verfahren zur insbesondere automatischen Georeferenzierung optischer Fernerkundungsbilddaten benötigt gemäß einer ersten Variante neben dem optischen Bild ein vorzugsweise hochgenau georeferenziertes SAR-Bild und ein DOM desselben Gebiets auf der Erde. Die Genauigkeit des DOMs ist für die Genauigkeit des Verfahrens entscheidend. Neben dieser Variante, nämlich "Optik+SAR+DOM", mit einem externen DOM, umfasst die Erfindung noch die beiden nachfolgend genannten Varianten:
Variante "Stereo+SAR": Hier werden Bilder einer optischen Stereo-Kamera verwendet, aus denen gleichzeitig das für die Georeferenzierung benötigte DOM abgeleitet werden kann.
Variante "Optik+InSAR": Bei dieser Variante wird ein interferometrisches SAR (InSAR) verwendet, z.B. TanDEM-X, das neben dem SAR-Bild ein DOM liefert.

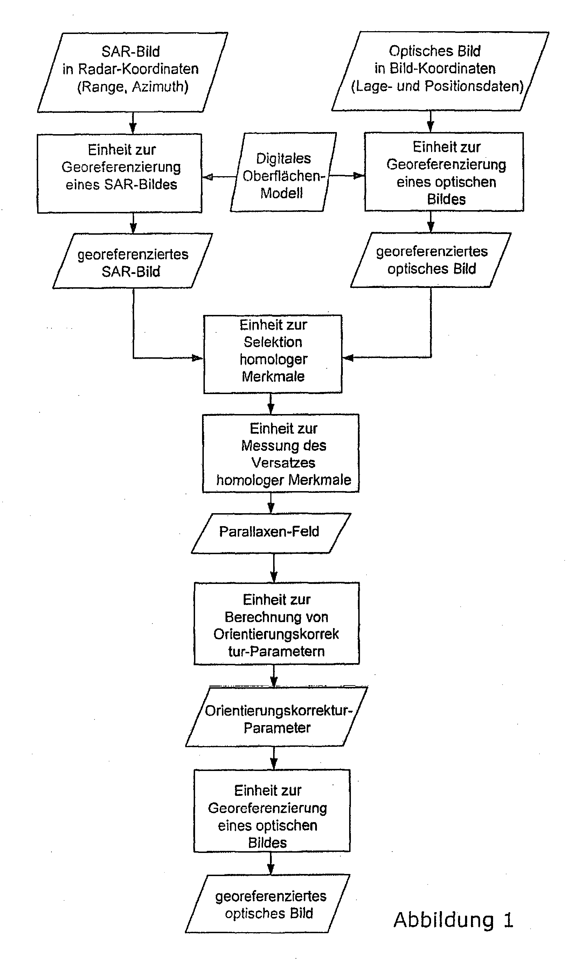

Das erfindungsgemäße Verfahren für die Variante "Optik+SAR+DOM" ist in Abbildung 1 dargestellt. Es werden zweckmäßigerweise folgende Einheiten verwendet:
- Einheit zur Georeferenzierung eines SAR-Bildes und Projektion in ein gemeinsames Koordinatensystem. Dieses Koordinatensystem, in welches sowohl die SAR-Daten wie auch (in einer nächsten Einheit) die optischen Daten projiziert werden, kann z. B. eine orthographische Kartenprojektion sein, oder aber auch das native SAR- oder native optischen Koordinatensystem.
- Einheit zur Georeferenzierung eines optischen Bildes und Projektion in ein gemeinsames (bzw. das oben erwähnte) Koordinatensystem: Diese Einheit nutzt etablierte Verfahren wie beispielsweise solche zur Orthorektifizierung von Bilddaten. Sie ist notwendig, um eine vorläufige Näherung der Georeferenzierung zu erhalten. Auch für diese Einheit ist ein DOM notwendig sowie die gemessenen Parameter der inneren und äußeren Orientierung bzw. die oben erwähnten RPCs.
- Einheit zur Selektion homologer Merkmale: Diese Einheit besteht aus einem Verfahren zur Bestimmung von Bildpunkten in den optischen und SAR-Daten, die denselben Gebieten oder Objekten der Erdoberfläche entsprechen. Hier kann es sich zum Beispiel um Straßen/Wege oder Felder/Wiesen handeln. Gebiete mit Bebauung und Waldgebiete sollten für die Selektion homologer Merkmale ausgeschlossen werden, da hier die unterschiedlichen geometrischen Abbildungseigenschaften von Optik und SAR starke lokale geometrische und radiometrische Verzerrungen bewirken. Weiterhin sollte stark reliefiertes Gelände ausgeschlossen werden, da hier die zur Verfügung stehenden DOMs häufig ungenau sind. Beinhaltet das DOM lokale Information über seine Genauigkeit, so können Gebiete geringer Genauigkeit identifiziert und ausgeschlossen werden. Die Identifizierung homologer Merkmale geschieht bevorzugt automatisch, kann aber auch manuell durchgeführt werden.
- Einheit zur Messung des relativen Versatzes von homologen Merkmalen in SAR- und optischem Bild. Das Ergebnis ist ein Parallaxenfeld im gemeinsamen Koordinatensystem. Aus den oben beschriebenen Gründen sollten hier Verfahren eingesetzt werden, die robust gegen unterschiedliche radiometrische Eigenschaften der Objekte im SAR- und optischen Bild sind. Das bevorzugte Verfahren ist die Maximierung der sog. Mutual Information. Feature basierte Methoden, also solche, die z.B. auf Kantenbildern arbeiten, sind ebenfalls einsetzbar. Diese Einheit kann, je nach eingesetztem Verfahren auch in die Einheit zur Selektion homologer Merkmale integriert sein.
- Einheit zur Berechnung von Orientierungskorrektur-Parametern. Durch Ausgleichungsrechnung oder einfache lineare Regression werden aus dem gemessenen Parallaxenfeld die benötigten Orientierungskorrekturparameter geschätzt. Hier handelt es sich vor allem um die Beobachtungswinkel, bzw. um die Korrektur der RPC Polynomkoeffizienten, da die Position der Kamera durch GPS-Messungen meist sehr genau bekannt ist.

Mit den nach Abbildung 1 ermittelten Orientierungskorrektur-Parametern wird die Orientierungsinformation des optischen Bildes korrigiert und damit die verbesserte Georeferenzierung in das schließlich gewünschte Koordinatensystem durchgeführt. Überschreiten die ermittelten Orientierungsfehler eine festzusetzende Grenze, wird der gesamte Vorgang wiederholt.

Das erfindungsgemäße Verfahren in den Varianten "Stereo+SAR" und "Optik+InSAR" ist nahezu mit dem in Abbildung 1 beschriebenen identisch. Das DOM inkl. lokaler Genauigkeitsmaske wird allerdings in einem ersten Schritt aus den stereo-optischen Daten bzw. aus den interferometrischen SAR-Daten auf bekannte Weise berechnet.

Die Anwendbarkeit des erfindungsgemäßen Verfahrens ist beschränkt auf Gebiete, in denen SAR-Bilder in ausreichender, oben angegebener Qualität vorliegen. Für Gebiete in Städten sowie in Gebieten, in denen ausschließlich Wald vorkommt, ist die Genauigkeit deutlich reduziert. Es genügen jedoch relativ wenige und kleine Bereiche in einem Bild, um die Orientierungswinkel mit den benötigten Genauigkeiten zu bestimmen.

Das erfindungsgemäße Verfahren ist in allen Bereichen der Georeferenzierung von hochaufgelösten optischen Bildern einsetzbar. Die Wert- und Qualitätserhöhung im Vergleich zu einem gängigen Produkt ohne diese genaue Georeferenzierung ist erheblich.

## Patentansprüche

1. Verfahren zur Georeferenzierung optischer Fernerkundungsbilder eines Erdoberflächenbereiches, bei dem
- ein mit einer elektro-optischen Aufnahmeeinrichtung aufgenommenes optisches Fernerkundungsbild des betreffenden Erdoberflächenbereichs bereitgestellt wird und
- das optische Fernerkundungsbild mit den vorhandenen Orbit- und Orientierungsinformationen und einem digitalen Oberflächenmodell des betreffenden Erdoberflächenbereichs georeferenziert wird,
**dadurch gekennzeichnet, dass**
- ein mit einer SAR-Einrichtung aufgenommenes SAR-Bild des betreffenden Erdoberflächenbereichs bereitgestellt wird,
- das SAR-Bild georeferenziert wird,
- in dem georeferenzierten optischen Fernerkundungsbild und dem georeferenzierten SAR-Bild homologe Gebiete ausgewählt werden, die in beiden Bildern denselben Objekten auf der Erdoberfläche entsprechen,
- der relative Versatz der homologen Gebiete in dem optischen Fernerkundungsbild und dem SAR-Bild ermittelt wird,
- Orientierungskorrekturparameter anhand des relativen Versatzes ermittelt werden und
- das optische Fernerkundungsbild mit Hilfe der ermittelten Orientierungskorrekturparameter erneut georeferenziert wird.

2. Verfahren nach Anspruch 1, **dadurch gekennzeichnet, dass** die elektrooptische Aufnahmeeinrichtung eine 2D-Kamera ist und ein digitales Oberflächenmodell zur Verfügung steht.

3. Verfahren nach Anspruch 2, **dadurch gekennzeichnet, dass** die SAR-Einrichtung ein interferometrisches SAR ist und dass das digitale Oberflächenmodell von dem interferometrischen SAR geliefert wird.

4. Verfahren nach Anspruch 1, **dadurch gekennzeichnet, dass** die elektro-optische Aufnahmeeinrichtung eine Stereo-Kamera ist und dass das digitale Oberflächenmodell aus den Stereo-Daten abgeleitet wird.

5. Verfahren nach einem der Ansprüche 1 bis 4, **dadurch gekennzeichnet, dass** die Auswahl der homologen Gebiete der beiden Bilder automatisch oder bedienerunterstützt erfolgt.

6. Verfahren nach einem der Ansprüche 1 bis 5, **dadurch gekennzeichnet, dass** die Daten der beiden Bilder in ein gemeinsames Koordinatensystem transformiert werden.

7. Verfahren nach Anspruch 6, **dadurch gekennzeichnet, dass** die Daten des optischen Fernerkundungsbildes in das Koordinatensystem der Daten des SAR-Bildes oder umgekehrt transformiert werden.

## Claims

1. A method for geo-referencing of optical remote sensing images of an area of the earth's surface, wherein
- an optical remote sensing image of the respective area of the earth's surface, captured by an electro-optical pickup device, is provided, and
- said optical remote sensing image is geo-referenced with the aid of the existing orbit and orientation information and a digital surface model of the respective area of the earth's surface,
**characterized in that**
- an SAR image of the respective area of the earth's surface, captured by an SAR device, is provided,
- said SAR image is geo-referenced,
- in the geo-referenced optical remote sensing image and the geo-referenced SAR image, homologous areas are selected which in both images correspond to the same objects on the earth's surface,
- the relative offset of the homologous areas in the optical remote sensing image and in the SAR image is detected,
- orientation correction parameters are obtained on the basis of said relative offset,
- said optical remote sensing image is again geo-referenced with the aid of said obtained orientation correction parameters.

2. The method of claim 1, **characterized in that** said electro-optical pickup device is a 2-D camera and that a digital surface model is made available.

3. The method of claim 2, **characterized in that** said SAR device is an interferometric SAR and that said digital surface model is supplied by said interferometric SAR.

4. The method of claim 1, **characterized in that** said electro-optical pickup device is a stereo camera and that said digital surface model is derived from the stereo data.

5. The method of any one of claims 1 to 4, **characterized in that** the selection of the homologous areas of the two images is performed automatically or by user intervention.

6. The method of any one of claims 1 to 5, **characterized in that** the data of the two images are transformed into a common coordinate system.

7. The method of claim 6, **characterized in that** the data of the optical remote sensing image are transformed into the coordinate system of the data of the SAR image or vice versa.

## Revendications

1. Procédé de géo-référencement d'images optiques, générées par télédétection, d'une région de la surface de la terre, dans lequel
- on fournit une image optique, générée par télédétection et enregistrée au moyen d'un dispositif d'enregistrement électro-optique, de la région concernée de la surface de la terre et
- on effectue un géo-référencement de l'image optique, générée par télédétection, au moyen d'informations d'orientation et d'orbite et d'un modèle de surface numérique de la région concernée de la surface de la terre,
**caractérisé en ce que**
- on fournit une image SAR, enregistrée au moyen d'un dispositif SAR, de la région concernée de la surface de la terre,
- on effectue un géo-référencement de l'image SAR,
- on sélectionne dans l'image optique, générée par télédétection et géo-référencée, et dans l'image SAR géo-référencée des zones homologues qui correspondent dans les deux images aux mêmes objets sur la surface de la terre,
- on détermine des paramètres de correction d'orientation en se fondant sur le décalage relatif et
- on effectue à nouveau un géo-référencement de l'image optique, générée par télédétection, à l'aide des paramètres de correction d'orientation déterminés.

2. Procédé selon la revendication 1, **caractérisé en ce que** le dispositif d'enregistrement électro-optique est une caméra 2D et **en ce que** l'on dispose d'un modèle de surface numérique.

3. Procédé selon la revendication 2, **caractérisé en ce que** le dispositif SAR est un SAR interférométrique et **en ce que** le modèle de surface numérique est délivré par le SAR interférométrique.

4. Procédé selon la revendication 1, **caractérisé en ce que** le dispositif d'enregistrement électro-optique est une caméra stéréo et **en ce que** le modèle de surface numérique est obtenu à partir des données stéréo.

5. Procédé selon l'une des revendications 1 à 4, **caractérisé en ce que** le choix des zones homologues des deux images est effectué de façon automatique ou bien avec l'assistance d'un opérateur.

6. Procédé selon l'une des revendications 1 à 5, **caractérisé en ce que** les données des deux images sont transformées en un système de coordonnées commun.

7. Procédé selon la revendication 6, **caractérisé en ce que** les données de l'image optique, générée par télédétection, sont transformées en le système de coordonnées des données de l'image SAR ou inversement.
